# EUROPÄISCHE PATENTSCHRIFT

(11) **EP 1 842 620 B1**
(45) Veröffentlichungstag und Bekanntmachung des Hinweises auf die Patenterteilung: **29.04.2009**
(21) Anmeldenummer: 07003468.1
(22) Anmeldetag: 20.02.2007
(51) Int. Cl.: B23Q 11/08

(54) **Abdeckung für Maschinenführungen**
Cover for machine tool guides
Couvercle pour le guidage de machines-outils

(30) Priorität: 03.04.2006 DE 102006015799
(43) Veröffentlichungstag der Anmeldung: 10.10.2007
(73) Patentinhaber: Gebr. Heller Maschinenfabrik GmbH, 72622 Nürtingen (DE)
(72) Erfinder: Schirling, Michael, 72622 Nürtingen (DE)
(74) Vertreter: Rüger, Barthelt & Abel Patentanwälte

(56) Entgegenhaltungen:
- EP-A1- 0 433 534
- WO-A-02/30615
- DE-A1- 10 223 044
- DE-A1- 19 538 636
- DE-C2- 3 635 874
- DE-C2- 19 607 370
- DE-U1- 20 115 094

## Beschreibung

Die Erfindung betrifft eine Abdeckeinrichtung für eine Werkzeugmaschine, insbesondere zur Abdeckung für Führungen und/oder Antrieben.

Werkzeugmaschinen weisen beispielsweise beweglich gelagerte Schlitten zur Aufnahme eines Werkstücks oder einer zum Halten des Werkstücks eingerichteten Vorrichtung oder auch Schlitten auf, die ein oder mehrere Bearbeitungsspindeln tragen. Der betreffende Schlitten ist beispielsweise mittels Linearführungen an einem Maschinengestell gelagert. Diese sind vor Verschmutzung zu schützen.

Dazu offenbart die DE 102 23 044 A1 einen so genannten frei tragenden Faltenbalg mit u-förmig gebogenen Blechen, die durch eine Faltenwandanordnung verbunden sind. Die u-förmigen Bleche bilden eine Panzerung für die Faltenwandanordnung. Die Schenkel eines u-förmigen Blechs klemmen das jeweils benachbarte u-förmige Blech zwischen einander.

Diese Anordnung führt zu einer relativ großen Dicke der Abdeckeinrichtung. Entsprechender Bauraum ist bei modernen Maschinen häufig nicht mehr gegeben.

Die DE 201 15 094 U1 offenbart ebenfalls eine Abdeckeinrichtung, die als Doppelfaltenbalg ausgebildet ist. Sie umfasst zwei durch Stegwände miteinander verbundene Faltenwandanordnungen, was zu einer relativ großen Dicke führt.

Aus der DE 36 35 874 C2 ist eine Faltenbalganordnung mit einer Lamellenpanzerung entsprechend dem Oberbegriff des Anspruchs 1 bekannt, wobei die einzelnen Lamellen mit Zwischenwänden der Faltenwandanordnung verbunden sind. Die Lamellen sind gerade ausgebildet. Sie liegen relativ lose aneinander an.

Dies gilt entsprechend für die DE 196 07 370 C2, die ebenfalls eine Abdeckeinrichtung für Werkzeugmaschinen offenbart. Die Abdeckeinrichtung besteht aus einer Faltenwandanordnung mit zur Panzerung vorgesehenen geraden Lamellen.

Bei Abdeckeinrichtungen für Werkzeugmaschinen treten immer wieder mehrere Probleme auf. Beispielsweise kommt es darauf an, dass die Abdeckungen möglichst leicht und schnell zu demontieren sind. Wenn ein Wartungsingenieur beispielsweise die Führungen oder die den Führungen zugeordneten Antriebe warten will, muss er zunächst die Abdeckungen entfernen. Dies soll möglichst sehr schnell gehen, wobei Montagezeiten von deutlich unter zwanzig Minuten angestrebt werden. Dies gilt nicht nur bei der Wartung der Führungen und Antriebe sondern auch die Auswechselung der Abdeckungen, die selbst Verschleißteile sind. Die Abdeckungen sind somit von Zeit zu Zeit auszuwechseln. Fallen sie aus bedeutet dies Maschinenstillstand.

Des Weiteren müssen evtl. zur Panzerung vorgesehene Lamellen möglichst spänedicht sein. Fallen bei der üblichen Nassbearbeitung relativ harmlose Späne an, die mit einem Ölstrom oder Kühlschmiermittelstrom von entsprechenden Abdeckungen abgespült werden, können feinere Späne, wie sie z.B. bei der Trockenbearbeitung anfallen können, an Abdeckungen zu erheblichen Schäden führen. Es muss vermieden werden, dass solche Späne in die Abdeckungen gelangen und diese beschädigen oder gar durch diese hindurch zu den Führungen vordringen.

Des Weiteren werden in modernen Werkzeugmaschinen häufig äußerst beengte Platzverhältnisse angetroffen. Für etwaige Abdeckungen bleibt dabei nur noch wenig Raum.

Die oben genannten Probleme werden mit der Abdeckeinrichtung nach den Ansprüchen 1 gelöst:

Die Abdeckeinrichtung weist gemäß Anspruch 1 eine Faltenwandanordnung auf, die von einer aus streifenförmigen Lamellen gebildeten Panzerung geschützt ist. Die Abdeckeinrichtung wird durch zwei Führungsschienen geführt, denen an den beiden Rändern der Abdeckeinrichtung vorgesehene Führungsausnehmungen zugeordnet sind. Diese sind nun so angeordnet, dass sie miteinander einen stumpfen Winkel einschließen. Dieser liegt z.B. und vorzugsweise im Bereich zwischen 140° und 160° . Die an beiden Enden von den entsprechenden Maschinenteile gelöste und zusammengeschobene Abdeckeinrichtung ist nur von den Führungsschienen noch getragen. Sie kann aufgrund der Neigung der Führungsausnehmungen zueinander und aufgrund der Flexibilität der Faltenwandanordnung nun im Ganzen relativ leicht aus den Führungsschienen herausgewunden werden. Eine Trennung der Einzelteile der Faltenwandanordnung und der Panzerung ist nicht erforderlich. Die Abdeckeinrichtung kann im Ganzen beiseite gelegt und nach erfolgter Wartung der sonst von ihr abgedeckten Führungen oder Antriebe auf umgekehrtem Wege wieder eingebaut werden, indem sie in zusammengeschobenem Zustand in den zwischen den Führungsschienen vorhandenen Zwischenraum hinein gewunden wird.

Beim Ein- und Auswinden der Abdeckeinrichtung werden die einzelnen, jeweils mit den Führungsausnehmungen versehenen Elemente, beispielsweise entsprechende an der Faltenwandanordnung vorhandene Zwischenwandelemente, um eine Richtung oder Achse gedreht, die quer zu der Bewegungsrichtung der Faltenwandanordnung orientiert ist und vorzugsweise etwa senkrecht zu den Führungsschienen steht. Die Montage- und Demontagezeiten liegen dabei deutlich unter zwanzig Minuten. Dies wird auch dann ermöglicht, wenn die Abdeckeinrichtung relativ lang, breit oder schwer ist.

Die Abdeckeinrichtung weist vorzugsweise im Wesentlichen parallel zueinander ausgerichtete Zwischenwandelemente auf, in denen die Führungsausnehmungen ausgebildet sind. Die Zwischenwandelemente können aus Kunststoff, beispielsweise PVC oder einem anderen geeigneten Kunststoff, bestehen. Die Führungsschienen bestehen hingegen vorzugsweise aus Metall, wiederum vorzugsweise aus Stahl. Diese Werkstoffpaarung gestattet die Betätigung der Abdeckeinrichtung ohne nennenswerten Verschleiß und ohne unangenehme Geräusche.

Die Führungsaufnehmungen weisen vorzugsweise eine Tiefe auf, die größer ist als ihre Breite. Beispielsweise sind sie rechteckig. Die Zwischenwandelemente sitzen dabei mit einigem Spiel auf den Führungsschienen, die vorzugsweise ebenfalls in Längsrichtung parallel zueinander und in Querrichtung in einem stumpfen Winkel zueinander orientiert sind. Sie weisen dabei einen zu den Führungsausnehmungen passenden Querschnitt, beispielsweise eine Rechteckform, auf. Das Spiel ist so bemessen, dass sich die Zwischenwandelemente leicht in Schienenlängsrichtung verschieben lassen und dabei aber sicher auf diesen gehalten sind, so lange sie nicht in der oben bezeichneten, quer zu den Führungsschienen orientierten Richtungen gedreht werden. Dieses ist allerdings nur möglich, wenn die Enden der Abdeckeinrichtung von den betreffenden Maschinenelementen gelöst sind. In montiertem Zustand ist die Abdeckeinrichtung deshalb sicher an den Führungsschienen und an der Werkzeugmaschine gehalten.

Vorzugsweise sind die Führungsschiene und die Führungsausnehmung hinterschneidungsfrei ineinander greifend ausgebildet. Dies führt zu einer Montage- und Demontageerleichterung indem die Abdeckeinrichtung auf die beschriebene Art besonders leicht von den Führungsschienen getrennt werden kann.

Vorzugsweise sind die Lamellen an den Zwischenwandelementen verankert. Dies ermöglicht in Verbindung mit der Faltenwandanordnung eine automatische Einstellung und Bewegung der Lamellen.

Es hat sich im Hinblick auf den Gegenstand des Anspruchs 11 als zweckmäßig herausgestellt, die Lamellen der Panzerung so auszubilden, dass sie um eine Linie gebogen sind, die sich parallel zu der Bewegungsrichtung der Abdeckeinrichtung erstreckt. Durch diese Maßnahme gelingt es, insbesondere wenn die Lamellen an der Faltenwandanordnung und wiederum insbesondere an den Zwischenwandelementen verankert sind, den Lamellen eine Vorspannung zu erteilen, mit der sie aneinander anliegen. Liegt jeweils eine Lamelle mit ihrem Rand an der Außenseite der benachbarten Lamelle mit etwas Vorspannung an, kann das Eindringen von Spänen in den von den Lamellen abgedeckten Raum verhindert werden. Die Stahllamellen können somit spänedicht ausgebildet werden. Dazu sind sie einerseits in der Faltenwandanordnung verankert und andererseits so ausgebildet, dass sie die gesamte Breite durchgehend über die Biegelinie hinweg überbrücken, wobei durch die so erhaltene Aussteifung eine gute vorgespannte gegenseitige Anlage erhalten wird. Außerdem ergibt sich in zusammengeschobenem Zustand eine geringe Paketdichte. Dies gilt insbesondere, wenn der über die Biegelinie hinweg zu messende Winkel zwischen den Enden jeder Lamelle im Bereich von 130 bis 170, vorzugsweise 140 bis 160° liegt.

Vorzugsweise sind die Lamellen nicht lediglich gekrümmt sondern an einer Biegelinie stumpfwinklig abgewinkelt. Dies gibt bei einfacher Herstellung und überschaubaren geometrischen Verhältnissen eine gute gegenseitige Lamellenanlage und eine geringe Paketdichte.

Vorzugsweise ist jede Lamelle mit einem Rand versehen, der zu der benachbarten Lamelle hin geneigt ist, um dort eine Linienanlage zu bilden. Dies ergibt eine gute Abdichtung zwischen den Lamellen.

Eine weitere vorteilhafte Ausführungsform der erfindungsgemäßen Werkzeugmaschine ist Gegenstand des Anspruchs 20. Demnach sind die Führungsausnehmungen der Faltenwandanordnung, beispielsweise an der Oberseite an der Außenseite der Abdeckeinrichtung und am unteren Rand an der Innenseite der Faltenwandanordnung angeordnet. Dies kann insbesondere dann so vorgesehen werden, wenn die Führungsausnehmungen an Zwischenwandelementen ausgebildet sind, die, falls erforderlich, an dem oberen und/oder dem unteren Rand der Faltenwandanordnung über diese hervorstehen können. Das genannte Konzept ermöglicht es, bei durchgehenden Führungsschienen auf beiden Seiten eines sich entlang der Führungsschienen bewegenden Schlittens unterschiedliche Abdeckeinrichtungen vorzusehen. Beispielsweise kann eine der Abdeckeinrichtungen oben außen und unten innen geführt sein, während die andere Abdeckeinrichtung sowohl oben als auch unten außen oder alternativ an beiden Seiten innen geführt ist. Hiermit kann unterschiedlichen Platzverhältnissen zu beiden Seiten des Schlittens Rechnung getragen werden, die sich beispielsweise durch das lediglich einseitige Vorhandensein von Antrieben oder dergleichen ergeben können.

Weitere Einzelheiten vorteilhafter Ausführungsformen der Erfindung sind Gegenstand von Ansprüchen, der Zeichnung oder der Beschreibung. Die Merkmale der unabhängigen Ansprüche und der Unteransprüche können miteinander beliebig kombiniert werden. In der Zeichnung ist ein Ausführungsbeispiel der Erfindung veranschaulicht. Es zeigen:
- Figur 1: eine Werkzeugmaschine in ausschnittsweiser, schematisierter, perspektivischer Darstellung,
- Figur 2: die Werkzeugmaschine nach Figur 1 in einer Stirnansicht,
- Figur 3: die Werkzeugmaschine nach Figur 1 in Draufsicht,
- Figur 4: die Werkzeugmaschine nach Figur 1 in ausschnittsweiser geschnittener Darstellung,
- Figur 5: die Abdeckeinrichtung der Werkzeugmaschine nach den Figuren 1 bis 4 in schematisierter, gesonderter, perspektivischer Darstellung,
- Figur 6: die Abdeckeinrichtung nach Figur 4 in einer gesonderten anderweitigen perspektivischen Ansicht und
- Figur 7: die Abdeckeinrichtung nach den Figuren 5 und 6 in einer schematisierten Stirnansicht.

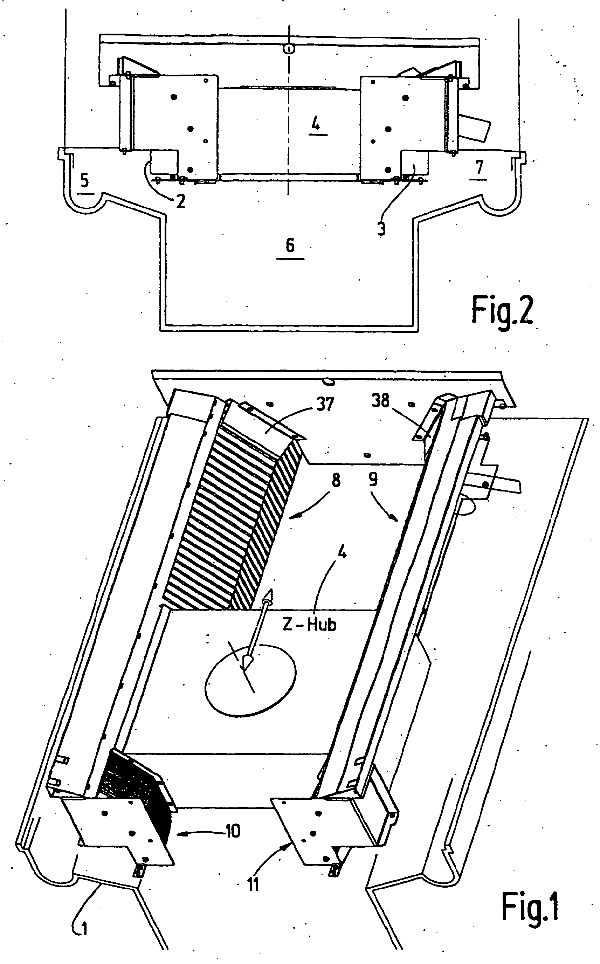

In Figur 1 ist als Bestandteil einer Werkzeugmaschine ein Maschinenbett 1 veranschaulicht, auf dem zwei Führungen 2, 3 angeordnet sind, die aus Figur 2 schematisch ersichtlich sind. Sie dienen zur Lagerung eines in dem Arbeitsraum der Werkzeugmaschine beweglich gelagerten Schlittens 4. Unterhalb der Führungen 2, 3 befinden sich Räume 5, 6, 7, in denen sich Späne sammeln können und aus denen die Späne abtransportiert werden.

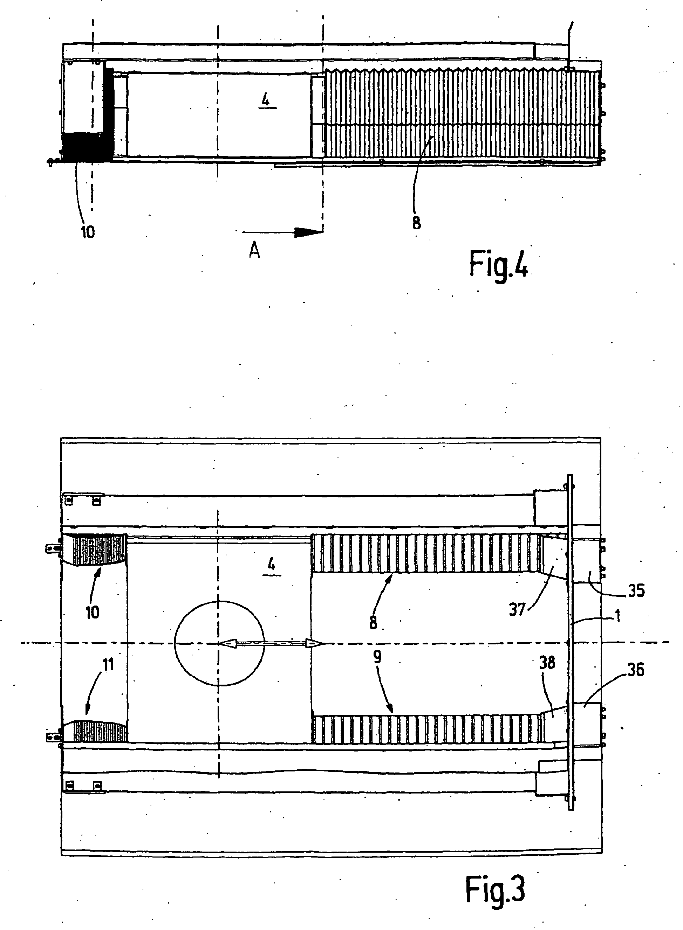

Zum Schutz der Führungen 2, 3 vor Spänen sind Abdeckeinrichtungen 8, 9, 10, 11 vorgesehen, die, wie aus Figur 3 und 4 hervorgeht, jeweils mit einem Ende mit dem Schlitten 4 und mit dem anderen Ende mit dem Maschinenbett 1 oder einem an diesem ortsfest gehaltenen Teil verbunden sind. Die Abdeckeinrichtungen 8, 9 sind bezüglich einer Vertikalebene zueinander gespiegelt ausgebildet. Ebenso sind die Abdeckeinrichtungen 10, 11 bezüglich der gleichen Ebene spiegelsymmetrisch zueinander ausgebildet. Die Abdeckeinrichtungen 8 bis 11 sind in Bewegungsrichtung des Schlittens 4, d.h. im vorliegenden Beispiel in Z-Richtung teleskopierbar ausgebildet. Damit gestatten sie eine ungehinderte Bewegung des Schlittens 4 in der betreffenden Bewegungsrichtung Z.

Nachfolgend wird zunächst die Abdeckeinrichtung 8 stellvertretend für die Abdeckeinrichtungen 8 und 9 beschrieben:

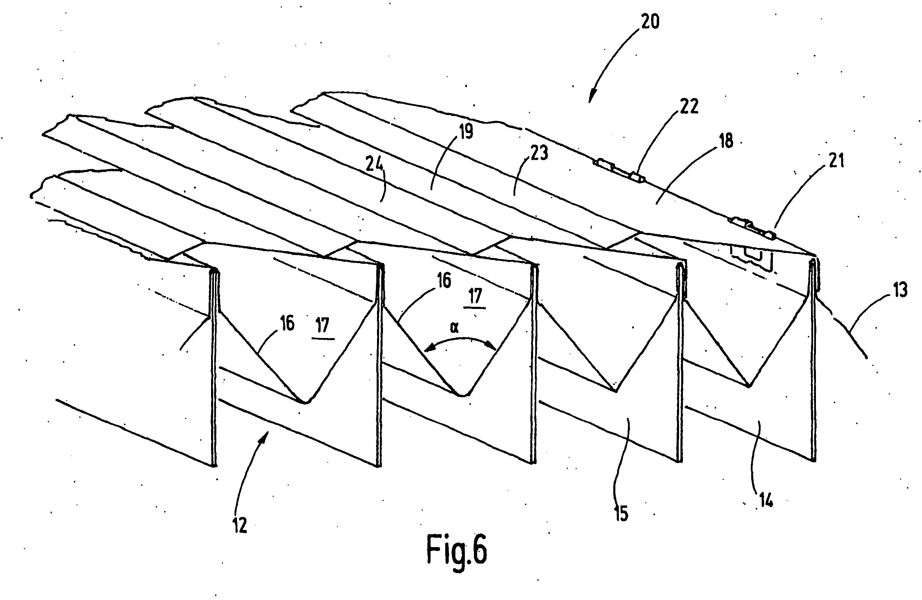

Die Abdeckeinrichtung 8 weist eine vorzugsweise aus flexiblem, beispielsweise gewebebewehrtem Kunststoffmaterial bestehende Faltenwandanordnung 12 auf. Zu dieser gehören ein flexibles Flächengebilde 13 und vorzugsweise ebene, aus Kunststoff bestehende Zwischenwandelemente 14, 15 usw. Das Flächengebilde 13 ist in Falten gelegt, so dass streifenförmige Abschnitte 16, 17 entstehen, die mit einander einen variablen Winkel α begrenzen. Die Abschnitte 16, 17 sind mit den Zwischenwandelementen 14, 15 verklebt oder verschweißt oder anderweitig verbunden. Des Weiteren sind an dem in Figur 6 oberen Ende der Zwischenwandelemente 14, 15 Lamellen 18, 19 usw. angeordnet, die eine Panzerung 20 bilden und mit abgewinkelten Enden an den oberen Abschnitten der Zwischenwandelemente 14, 15 gehalten sind. Dazu können Federklemmen 21, 22 dienen. Die Lamellen 18, 19 sind an ihrem freien Ende jeweils abgewinkelt ausgebildet. D.h. sie weisen einen schmalen Rand 23, 24 auf, der zu der jeweils benachbarten Lamelle hin gebogen ist und mit dieser in Linienberührung steht. Die Lamellen 18, 19 sind an den Zwischenwandelementen 14, 15 so gehalten, dass die Lamellen 18, 19 mit einer gewissen, nicht zu großen Vorspannung aneinander anliegen.

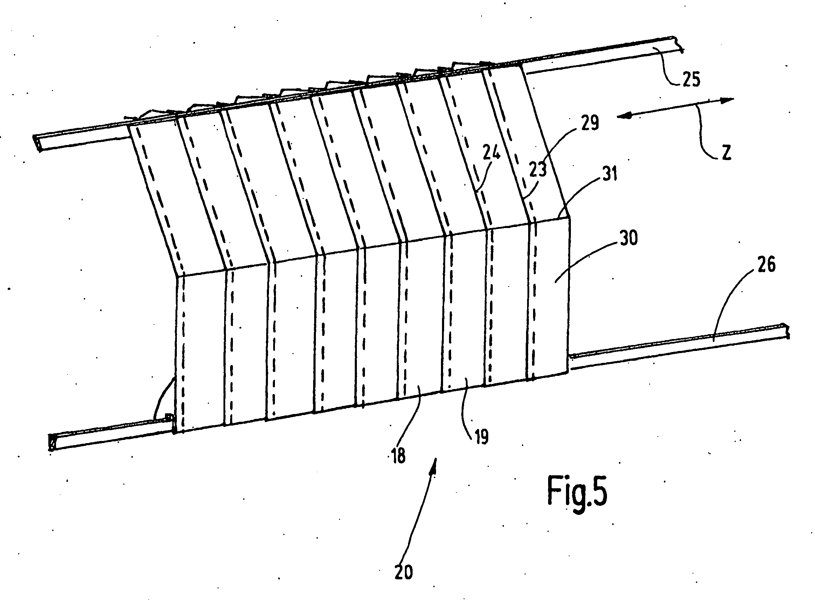

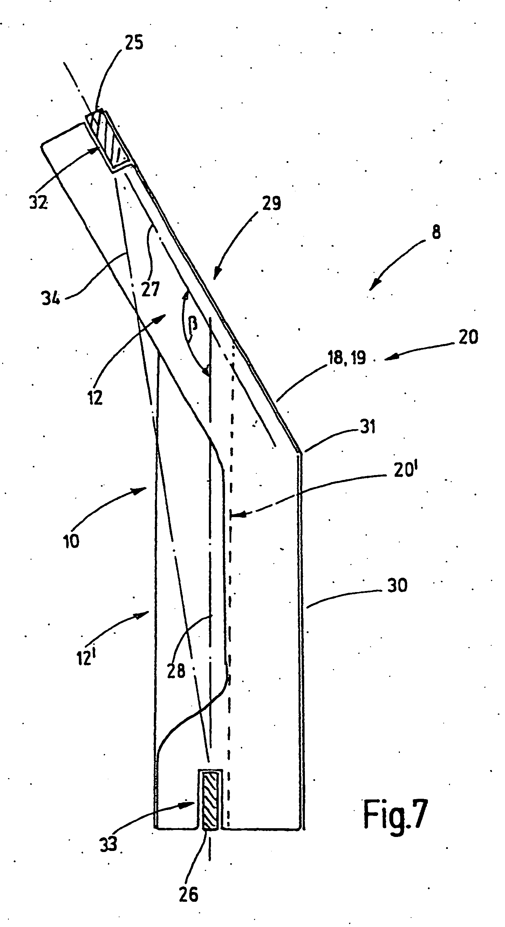

Die aus der Faltenwandanordnung 12 und der Panzerung 20 gebildete Einheit ist, wie Figur 5 und 6 veranschaulicht, auf zwei parallel zueinander angeordneten Führungsschienen 25, 26 verschiebbar gehalten. Die Führungsschienen 25, 26 erstrecken sich parallel zu der Bewegungsrichtung Z. Die Führungsschienen 25, 26 weisen z.B. einen Rechteckquerschnitt auf, wie insbesondere aus Figur 7 hervorgeht. Sie sind dabei in in Figur 7 strichpunktiert eingetragenen Ebenen 27, 28 angeordnet, die zueinander in einem stumpfen Winkel β orientiert sind. Dieser liegt vorzugsweise im Bereich von 140 bis 160°. Ebenso sind, wie Figur 5 und 7 erkennen lassen, die Faltenwandanordnung 12, wie auch die Lamellen 18, 19 der gesamten Panzerung 20 stumpfwinklig abgewinkelt. Jede Lamelle 18, 19 weist einen oberen, im Wesentlichen ebenen Schenkel 29 und einen vorzugsweise ebenfalls ebenen unteren Schenkel 30 auf, die an einer Biegelinie 31 aneinander grenzen. Die Ränder 23, 24 können im Bereich der Biegelinie 31 mit einem sehr spitzwinkligen V-förmigen Einschnitt versehen sein, um an dieser Stelle spänedicht abzuschließen. Die Biegelinie 31 kann, wie dargestellt, als scharfe Biegelinie, d.h. als Knick, ausgebildet sein. Alternativ ist es möglich, eine Rundung vorzusehen, die sich über einen gewissen Abschnitt der Lamelle 18, 19 oder über die gesamte Lamelle 18, 19 hinweg erstreckt.

Wie Figur 7 veranschaulicht, sind zur Aufnahme der Führungsschienen 25, 26 in der Abdeckeinrichtung 8 Führungsausnehmungen 32, 33 ausgebildet. Diese sind vorzugsweise in dem Zwischenwandelement 14, 15 vorgesehen und in der Kontur der jeweiligen Führungsschiene 25, 26 angepasst. Es ist reichlich Spiel vorhanden, um ein Klemmen der Zwischenwandelemente zu verhindern und zwar auch dann, wenn diese etwas um eine gedachte, die Führungsschiene 25, 26 verbindende Achse 34 gedreht werden. Die Führungsausnehmung 32 oder 33 liegt an dem oberen Ende des Zwischenwandelements 14 auf der der Panzerung 20 zugewandten Außenseite der Faltenwandanordnung 12. Die in Figur 7 untere, der Führungsschiene 26 zugeordnete Führungsausnehmung 33 liegt im vorliegenden Ausführungsbeispiel an der von der Panzerung 20 abgewandten inneren Seite der Faltenwandanordnung 12. Die Zwischenwandelemente weisen dazu entsprechende Vorsprünge auf.

Figur 7 veranschaulicht nicht nur die Abdeckeinrichtung 8 sondern auch die Abdeckeinrichtung 10 stellvertretend für die beiden Abdeckeinrichtungen 9, 11. In Figur 7 ist die Abdeckeinrichtung 10 teilweise von der Abdeckeinrichtung 8 verdeckt. Jedoch ist ihre Faltenwandanordnung 12' zumindest im unteren Bereich teilweise sichtbar. Die Panzerung 20' deckt sich im oberen Teil mit der Panzerung 20 und ist im unteren Abschnitt gestrichelt veranschaulicht. Wie ersichtlich, liegt diese näher an der Führungsschiene 26 als es bei der Panzerung 20 der Fall ist. Die Abdeckeinrichtung 10 weist sowohl an ihrem oberen als auch an ihrem unteren Ende Führungsausnehmungen auf, die an der Außenseite, d.h. an der der Panzerung 20' zugewandten Seite der Abdeckeinrichtung 10 angeordnet sind.

Die Abdeckeinrichtungen 8 bis 11 arbeiten wie folgt:

Die Abdeckeinrichtung 8 bis 11 ist jeweils mit einem geeigneten Flansch an den Schlitten 4 bzw. dem Maschinenbett befestigt. Bewegt sich der Schlitten 4 in Z-Richtung wird somit die in Fahrtrichtung voraus liegende Abdeckeinrichtung 8, 9 zusammengeschoben während die nacheilende Abdeckeinrichtung 10, 11 auseinander gezogen wird. Beim Zusammenschieben stauen sich die Lamellen aneinander, wobei sie teilweise von der jeweiligen Faltenwandanordnung 12, 12' weg gespreizt werden. Figur 3 veranschaulicht anhand der Abdeckeinrichtungen 10, 11 den Aufbau des jeweiligen Lamellenpakets. Die für das geringfügige Ausschwenken der Lamellen erforderliche Nachgiebigkeit ergibt sich durch die Verankerung der Lamellen an den vorzugsweise etwas flexiblen Zwischenwandelementen 14, 15 während die Lamellen 18, 19 selbst insbesondere durch ihre einstückige Ausbildung über die Biegelinie 31 hinweg relativ steif sind. Unabhängig, ob die Abdeckeinrichtung 8 bis 11 relativ stark gestaucht ist (Abdeckeinrichtungen 10 und 11) oder ob sie auf Maximallänge gedehnt ist (Abdeckeinrichtungen 8, 9) liegen die Lamellen spänedicht aneinander an. Die im Arbeitsraum befindlichen Späne können somit nicht zu der Faltenwandanordnung 12 vordringen. Jedenfalls nicht in nennenswertem Maß.

Bei der Bewegung des Schlittens 4 verformt sich die Faltenwandordnung 12, indem sich der Winkel α zwischen den Streifen 16, 17 vergrößert oder verkleinert. Die Abstände zwischen den Zwischenwandelementen 14, 15 der gesamten Faltenwandanordnung 12 bleiben dabei über die gesamte Länge derselben relativ gleichmäßig verteilt. Die Elastizität des Flächengebildes 13 stellt eine ungefähr gleichmäßige Beabstandung der Zwischenwandelemente ein. Die gute Anlage der Lamellen aneinander wird insbesondere durch deren Steifigkeit hinsichtlich einer Biegung um die Achse 34 sichergestellt. Diese Steifigkeit ergibt sich Steifigkeit ergibt sich durch die Abwinklung an der Biegelinie 31.

Soll die Abdeckeinrichtung 8 oder 10 demontiert werden, geht dies besonders einfach und schnell, indem sie an ihren Enden zunächst von dem Maschinenbett und dem Schlitten 4 gelöst wird. Sodann kann sie von Hand zusammengeschoben werden, bis sie etwa die Größe des Pakets aufweist, wie in Figur 3 die Abdeckeinrichtung 10 oder 11. Sie kann dann mit Bezug auf Figur 7 um die Achse 34 geschwenkt und somit aus den Führungsschienen 25, 26 heraus gewunden werden. Somit ist sie mit wenigen Handgriffen als Paket zu entnehmen. Die bislang abgedeckten Führungen liegen nun frei. Zur Montage der Abdeckeinrichtung 8 wird der Bewegungsablauf in umgekehrter Reihenfolge durchlaufen. Das zusammengeschobene, aus der Faltenwandanordnung 12 und der Panzerung 20 bestehende Paket wird durch Schwenk um die Achse 34 in den Zwischenraum zwischen die Führungsschiene 25, 26 gewunden, wonach die Enden der Abdeckeinrichtung wieder mit dem Maschinenbett bzw. dem Schlitten 4 verbunden werden.

Das erfindungsgemäße Konzept gestattet außerdem die Verwendung durchgehender Führungsschienen 25, 26 über die gesamte Länge des Bewegungsbereichs des Schlittens 4 und des Maschinenbetts 1. Sowohl die Abdeckeinrichtung 10 als auch die Abdeckeinrichtung 8 können somit auf den gleichen Führungsschienen 25, 26 laufen. Gleiches gilt entsprechend für die Abdeckeinrichtungen 9, 11. Somit kann zwischen den Abdeckeinrichtungen 10, 11 ein breiterer Innenraum frei gelassen werden als zwischen den Abdeckeinrichtungen 8, 9. Die Abdeckeinrichtungen 8, 9 geben jedoch an den Führungen mehr Raum, um beispielsweise oberhalb der Führungsschiene 26 Einbauten, wie beispielsweise Kugelrollspindeln oder dergleichen vorzusehen.

Die Abdeckeinrichtungen 8, 9 arbeiten, wie Fig. 3 erkennen lässt, mit außerhalb des Arbeitsraums angeordneten Aufnahmekammern 35, 36 zusammen, in die die Lamellen eingeschoben werden können. Somit kann der Schlitten 4 bis nahe an die den Arbeitraum abschließende Wand herangefahren werden. Es sind Abstreifbleche 37, 38 vorgesehen, die von der den Arbeitsraum abschließenden Wand in den Arbeitsraum ragen und mit ihren Stirnkanten auf den Lamellen der Abdeckeinrichtungen 8, 9 gleiten. Die Abstreifbleche 37, 38 entfernen auf den Lamellen liegende Späne und verhindern, dass diese in die Aufnahmekammern 35, 36 geschleppt werden.

Die erfindungsgemäße Abdeckeinrichtung 8 für Werkzeugmaschinen und deren Führungen zeichnet sich durch leichte Demontierbarkeit aus. Dies wird erreicht, indem eine aus einer Faltenwandanordnung 12 und einer Panzerung 20 bestehende Einheit auf Führungsschienen gelagert ist, die in zueinander geneigten Ebenen angeordnet sind. Diese Neigung erleichtert die Montage oder Demontage, indem die Abdeckeinrichtung mit einer Drehung um eine die Führungsschienen 25, 26 verbindende Achse oder Richtung geschwenkt wird.

## Patentansprüche

1. Abdeckeinrichtung (8, 10) für eine Werkzeugmaschine, insbesondere zur Abdeckung von Führungen und/oder Antrieben,
mit einer in einer Bewegungsrichtung (Z) ausziehbaren Faltenwandanordnung (12), die eine Anzahl von sich quer zu der Bewegungsrichtung (Z) erstreckenden streifenförmigen Abschnitten (16, 17) aufweist, die aneinander anschließen und miteinander jeweils paarweise einen beim Ausziehen veränderbaren Winkel (α) einschließen,
mit einer Panzerung (20), zu der eine Anzahl übereinanderschiebbarer sich quer zu der Bewegungsrichtung (Z) erstreckender streifenförmiger Lamellen (18, 19) gehören, die an der Faltenwandanordnung (12) verankert sind,
mit einer ersten Führungsausnehmung (32), die an einem ersten Rand der Faltenwandanordnung (12) angeordnet ist und der eine erste Führungsschiene (25) zugeordnet ist,
mit einer zweiten Führungsausnehmung (33), die an einem dem ersten Rand gegenüberliegenden zweiten Rand der Faltenwandanordnung (12) angeordnet ist und der eine zweite Führungsschiene (26) zugeordnet ist,
**dadurch gekennzeichnet, dass** die Führungsausnehmungen (32, 33) voneinander weg weisend, miteinander einen stumpfen Winkel (β) einschließend ausgerichtet sind.

2. Abdeckeinrichtung nach Anspruch 1, **dadurch gekennzeichnet, dass** die Faltenwandanordnung (12) zueinander im Wesentlichen parallel ausgerichtete Zwischenwandelemente (14, 15) aufweist, in denen die Führungsausnehmungen (32, 33) ausgebildet sind.

3. Abdeckeinrichtung nach Anspruch 2, **dadurch gekennzeichnet, dass** die Zwischenwandelemente (14, 15) ebene Platten sind.

4. Abdeckeinrichtung nach Anspruch 2, **dadurch gekennzeichnet, dass** die Zwischenwandelemente (14, 15) aus Kunststoff ausgebildet sind.

5. Abdeckeinrichtung nach Anspruch 1, **dadurch gekennzeichnet, dass** die Führungsausnehmungen (32, 33) eine Tiefe aufweisen, die größer ist als deren Breite.

6. Abdeckeinrichtung nach Anspruch 1, **dadurch gekennzeichnet, dass** die Führungsausnehmungen (32, 33) eine Rechteckform aufweisen.

7. Abdeckeinrichtung nach Anspruch 1, **dadurch gekennzeichnet, dass** die Führungsschienen (25, 26) in einem Abstand parallel und in Ebenen (27, 28) angeordnet sind, die miteinander einen stumpfen Winkel (β) einschließen.

8. Abdeckeinrichtung nach Anspruch 1, **dadurch gekennzeichnet, dass** die Führungsschienen (25, 26) einen im Wesentlichen rechteckigen Querschnitt aufweisen.

9. Abdeckeinrichtung nach Anspruch 1, **dadurch gekennzeichnet, dass** die Führungsschiene (25, 26) und die Führungsausnehmung (32, 33) hinterschneidungsfrei ineinandergreifend ausgebildet sind.

10. Abdeckeinrichtung nach Anspruch 1, **dadurch gekennzeichnet, dass** die Lamellen (18, 19) an den Zwischenwandelementen (14, 15) verankert sind.

11. Abdeckeinrichtung nach Anspruch 1, **dadurch gekennzeichnet, dass**
die Lamellen (18, 19) um eine Linie (31) gebogen sind, die sich parallel zu der Bewegungsrichtung (Z) erstreckt.

12. Abdeckeinrichtung nach Anspruch 11, **dadurch gekennzeichnet, dass** die Lamellen (18, 19) an einer Biegelinie (31), die sich parallel zu der Bewegungsrichtung erstreckt, stumpfwinklig abgewinkelt sind.

13. Abdeckeinrichtung nach Anspruch 11, **dadurch gekennzeichnet, dass** die Lamelle (18, 19) einstückig ausgebildet ist.

14. Abdeckeinrichtung nach Anspruch 11, **dadurch gekennzeichnet, dass** die Lamelle (18, 19) Ränder (23, 24) aufweist, die im Bereich der Biegelinie (31) mit einem spitzwinkligen v-förmigen Einschnitt versehen sind.

15. Abdeckeinrichtung nach Anspruch 11, **dadurch gekennzeichnet, dass** Panzerung (20) aus Lamellen (18, 19) besteht, die untereinander gleich ausgebildet sind.

16. Abdeckeinrichtung nach Anspruch 11, **dadurch gekennzeichnet, dass** Lamellen (18, 19) in jeder Auszugposition der Abdeckeinrichtung (8, 10) einander überlappend angeordnet sind.

17. Abdeckeinrichtung nach Anspruch 11, **dadurch gekennzeichnet, dass** die Lamellen (18, 19) jeweils mit einem quer zu der Bewegungsrichtung (Z) verlaufenden Rand (23, 24) an der jeweiligen benachbarten Lamelle anliegen.

18. Abdeckeinrichtung nach Anspruch 11, **dadurch gekennzeichnet, dass** die Lamellen (18, 19) an ihrem Rand (23, 24) zu der benachbarten Lamelle hin abgewinkelt sind.

19. Abdeckeinrichtung nach Anspruch 11, **dadurch gekennzeichnet, dass** die Faltenwandanordnung (12) zueinander im Wesentlichen parallel ausgerichtete Zwischenwandelemente (14, 15) aufweist, in denen die Führungsausnehmungen (32, 33) ausgebildet sind.

20. Abdeckeinrichtung nach Anspruch 19, **dadurch gekennzeichnet, dass** die Zwischenwandelemente (14, 15) ebene Platten sind.

21. Abdeckeinrichtung nach Anspruch 19, **dadurch gekennzeichnet, dass** die Zwischenwandelemente (14, 15) aus Kunststoff ausgebildet sind.

22. Abdeckeinrichtung nach Anspruch 19, **dadurch gekennzeichnet, dass** die Lamellen (18, 19) an den Zwischenwandelementen (14, 15) verankert sind.

23. Abdeckeinrichtung nach Anspruch 1, **dadurch gekennzeichnet, dass**
die ersten Führungsausnehmungen (32) auf einer ersten Seite der Faltenwandanordnung (12) und die zweiten Führungsausnehmungen (33) an der anderen Seite der Faltenwandanordnung (12) angeordnet sind.

24. Abdeckeinrichtung nach Anspruch 23, **dadurch gekennzeichnet, dass** die Zwischenwandelemente (14, 15) ebene Platten sind.

25. Abdeckeinrichtung nach Anspruch 23, **dadurch gekennzeichnet, dass** die Zwischenwandelemente (14, 15) aus Kunststoff ausgebildet sind.

26. Abdeckeinrichtung nach Anspruch 23, **dadurch gekennzeichnet, dass** der ersten Führungsausnehmung (32) eine erste Führungsschiene (25) zugeordnet ist und dass der zweiten Führungsausnehmung (33) eine zweite Führungsschiene (26) zugeordnet ist.

27. Abdeckeinrichtung nach Anspruch 23, **dadurch gekennzeichnet, dass** die erste und die zweite Führungsausnehmung (32, 33) voneinander weg weisend, miteinander einen stumpfen Winkel (β) einschließend ausgerichtet sind.

28. Abdeckeinrichtung nach Anspruch 23, **dadurch gekennzeichnet, dass** sie mit einer Panzerung (20) versehen ist, zu der eine Anzahl übereinanderschiebbarer sich quer zu der Bewegungsrichtung (Z) erstreckender streifenförmiger Lamellen (18, 19) gehören, die an der Faltenwandanordnung (12) verankert sind.

29. Werkzeugmaschine mit einem beweglich gelagerten Maschinenelement (4) und einer Führungseinrichtung (2, 3) für das Maschinenelement (4), mit einer ersten Abdeckeinrichtung (10) nach einem der vorhergehenden Ansprüche und mit einer zweiten Abdeckeinrichtung (8) nach einem der Ansprüche 23 bis 28.

## Claims

1. Cover arrangement (8, 10) for a machine tool, in particular for covering guides and/or drives,
with a folding wall arrangement (12), which is extensible in a direction of movement (Z) and has a number of strip-shaped sections (16, 17), which extend transversely to the direction of movement (Z), adjoin one another and respectively in pairs together enclose an angle (α) that is variable during extension,
with an armour plating (20), which includes a number of strip-shaped slats (18, 19), which can be slid over one another, extend transversely to the direction of movement (Z) and are anchored on the folding wall arrangement (12),
with a first guide recess (32), which is arranged on a first edge of the folding wall arrangement (12) and with which a first guide rail (25) is associated,
with a second guide recess (33), which is arranged on a second edge of the folding wall arrangement (12) opposite the first edge and with which a second guide rail (26) is associated,
**characterised in that** the guide recesses (32, 33) are aligned to point away from one another and together enclose an obtuse angle (β).

2. Cover arrangement according to claim 1, **characterised in that** the folding wall arrangement (12) has intermediate wall elements (14, 15), which are aligned substantially parallel to one another and in which the guide recesses (32, 33) are configured.

3. Cover arrangement according to claim 2, **characterised in that** the intermediate wall elements (14, 15) are plane panels.

4. Cover arrangement according to claim 2, **characterised in that** the intermediate wall elements (14, 15) are made from plastic.

5. Cover arrangement according to claim 1, **characterised in that** the guide recesses (32, 33) have a depth that is greater than their width.

6. Cover arrangement according to claim 1, **characterised in that** the guide recesses (32, 33) have a rectangular shape.

7. Cover arrangement according to claim 1, **characterised in that** the guide rails (25, 26) are spaced parallel and arranged in planes (27, 28), which together enclose an obtuse angle (β).

8. Cover arrangement according to claim 1, **characterised in that** the guide rails (25, 26) have a substantially rectangular cross-section.

9. Cover arrangement according to claim 1, **characterised in that** the guide rail (25, 26) and the guide recess (32, 33) are configured to interlock without an undercut.

10. Cover arrangement according to claim 1, **characterised in that** the slats (18, 19) are anchored on the intermediate wall elements (14, 15).

11. Cover arrangement according to claim 1, **characterised in that** the slats (18, 19) are bent around a line (31), which extends parallel to the direction of movement (Z).

12. Cover arrangement according to claim 11, **characterised in that** the slats (18, 19) are angled off at an obtuse angle on a bending line (31), which extends parallel to the direction of movement.

13. Cover arrangement according to claim 11, **characterised in that** the slat (18, 19) is configured in one piece.

14. Cover arrangement according to claim 11, **characterised in that** the slat (18, 19) has edges (23, 24), which are provided in the region of the bending line (31) with an acute-angled, v-shaped incision.

15. Cover arrangement according to claim 11, **characterised in that** the armour plating (20) consists of slats (18, 19), which are configured identically to one another.

16. Cover arrangement according to claim 11, **characterised in that** slats (18, 19) are arranged to overlap one another in every extension position of the cover arrangement (8, 10).

17. Cover arrangement according to claim 11, **characterised in that** the slats (18, 19) abut against the respective adjacent slat with a respective edge (23, 24) extending transversely to the direction of movement (Z).

18. Cover arrangement according to claim 11, **characterised in that** the slats (18, 19) are angled off at their edge (23, 24) towards the adjacent slat.

19. Cover arrangement according to claim 11, **characterised in that** the folding wall arrangement (12) has intermediate wall elements (14, 15) aligned substantially parallel to one another, in which the guide recesses (32, 33) are configured.

20. Cover arrangement according to claim 19, **characterised in that** the intermediate wall elements (14, 15) are plane panels.

21. Cover arrangement according to claim 19, **characterised in that** the intermediate wall elements (14, 15) are made from plastic.

22. Cover arrangement according to claim 19, **characterised in that** the slats (18, 19) are anchored on the intermediate wall elements (14, 15).

23. Cover arrangement according to claim 1, **characterised in that** the first guide recesses (32) are arranged on a first side of the folding wall arrangement (12) and the second guide recesses (33) are arranged on the other side of the folding wall arrangement (12).

24. Cover arrangement according to claim 23, **characterised in that** the intermediate wall elements (14, 15) are plane panels.

25. Cover arrangement according to claim 23, **characterised in that** the intermediate wall elements (14, 15) are made from plastic.

26. Cover arrangement according to claim 23, **characterised in that** a first guide rail (25) is associated with the first guide recess (32), and that a second guide rail (26) is associated with the second guide recess (33).

27. Cover arrangement according to claim 23, **characterised in that** the first and the second guide recess (32, 33) are aligned to point away from one another and together enclose an obtuse angle (β).

28. Cover arrangement according to claim 23, **characterised in that** it is provided with an armour plating (20), which includes a number of strip-shaped slats (18, 19), which can be slid over one another, extend transversely to the direction of movement (Z) and are anchored on the folding wall arrangement (12).

29. Machine tool with a movably mounted machine element (4) and a guide means (2, 3) for the machine element (4), with a first cover arrangement (10) according to one of the preceding claims and with a second cover arrangement (8) according to one of claims 23 to 28.

## Revendications

1. Dispositif de recouvrement (8, 10) pour une machine-outil, en particulier pour recouvrir des glissières et/ou des moyens d'entraînement,
comprenant un agencement de paroi en accordéon (12) qui peut être déployé dans une direction de mouvement (Z) et présente un certain nombre de sections (16, 17) en forme de bandes, lesquelles s'étendent perpendiculairement à la direction de mouvement (Z), se raccordent les unes aux autres et forment entre elles, chaque fois par paires, un angle (α) pouvant être modifié lors du déploiement,
comprenant un blindage (20) qui comporte un certain nombre de lamelles (18, 19) en forme de bandes, lesquelles s'étendent perpendiculairement à la direction de mouvement (Z), peuvent être glissées les unes sur les autres et sont fixées à l'agencement de paroi en accordéon (12),
comprenant un premier évidement de guidage (32) qui est disposé sur un premier bord de l'agencement de paroi en accordéon (12) et auquel est associé un premier rail de guidage (25),
comprenant un deuxième évidement de guidage (33) qui est disposé sur un deuxième bord de l'agencement de paroi en accordéon (12), à l'opposé du premier bord, et auquel est associé un deuxième rail de guidage (26),
**caractérisé par le fait que** les évidements de guidage (32, 33) sont orientés dans des directions différentes et forment un angle obtus (β) entre eux.

2. Dispositif de recouvrement selon la revendication 1, **caractérisé par le fait que** l'agencement de paroi en accordéon (12) présente des éléments de paroi intermédiaires (14, 15) qui sont orientés de façon sensiblement parallèle et dans lesquels sont réalisés les évidements de guidage (32, 33).

3. Dispositif de recouvrement selon la revendication 2, **caractérisé par le fait que** les éléments de paroi intermédiaires (14, 15) sont des plaques planes.

4. Dispositif de recouvrement selon la revendication 2, **caractérisé par le fait que** les éléments de paroi intermédiaires (14, 15) sont réalisés en matière plastique.

5. Dispositif de recouvrement selon la revendication 1, **caractérisé par le fait que** les évidements de guidage (32, 33) présentent une profondeur qui est supérieure à leur largeur.

6. Dispositif de recouvrement selon la revendication 1, **caractérisé par le fait que** les évidements de guidage (32, 33) présentent une forme rectangulaire.

7. Dispositif de recouvrement selon la revendication 1, **caractérisé par le fait que** les rails de guidage (25, 26) sont disposés parallèlement, à distance l'un de l'autre, et dans des plans (27, 28) qui forment entre eux un angle obtus (β).

8. Dispositif de recouvrement selon la revendication 1, **caractérisé par le fait que** les rails de guidage (25, 26) présentent une section transversale sensiblement rectangulaire.

9. Dispositif de recouvrement selon la revendication 1, **caractérisé par le fait que** le rail de guidage (25, 26) et l'évidement de guidage (32, 33) sont réalisés de manière à s'engager l'un dans l'autre sans contre-dépouille.

10. Dispositif de recouvrement selon la revendication 1, **caractérisé par le fait que** les lamelles (18, 19) sont fixées aux éléments de paroi intermédiaires (14, 15).

11. Dispositif de recouvrement selon la revendication 1, **caractérisé par le fait que** les lamelles (18, 19) sont incurvées autour d'une ligne (31) qui est parallèle à la direction de mouvement (Z).

12. Dispositif de recouvrement selon la revendication 11, **caractérisé par le fait que** les lamelles (18, 19) sont pliées, en formant un angle obtus, autour d'une ligne de courbure (31) qui est parallèle à la direction de mouvement.

13. Dispositif de recouvrement selon la revendication 11, **caractérisé par le fait que** la lamelle (18, 19) est réalisée d'une seule pièce.

14. Dispositif de recouvrement selon la revendication 11, **caractérisé par le fait que** la lamelle (18, 19) présente des bords (23, 24) qui, dans la région de la ligne de courbure (31), sont pourvus d'une découpe en forme de V à angle aigu.

15. Dispositif de recouvrement selon la revendication 11, **caractérisé par le fait que** le blindage (20) est constitué de lamelles (18, 19) qui sont identiques entre elles.

16. Dispositif de recouvrement selon la revendication 11, **caractérisé par le fait que** dans toutes les positions de déploiement du dispositif de recouvrement (8, 10), les lamelles (18, 19) se chevauchent les unes les autres.

17. Dispositif de recouvrement selon la revendication 11, **caractérisé par le fait que** les lamelles (18, 19) sont appliquées respectivement contre la lamelle voisine chaque fois avec un bord (23, 24) qui est perpendiculaire à la direction de mouvement (Z).

18. Dispositif de recouvrement selon la revendication 11, **caractérisé par le fait que** les lamelles (18, 19) sont pliées avec leur bord (23, 24) en direction de la lamelle voisine.

19. Dispositif de recouvrement selon la revendication 11, **caractérisé par le fait que** l'agencement de paroi en accordéon (12) présente des éléments de paroi intermédiaires (14, 15) qui sont sensiblement parallèles les uns aux autres et dans lesquels sont réalisés les évidements de guidage (32, 33).

20. Dispositif de recouvrement selon la revendication 19, **caractérisé par le fait que** les éléments de paroi intermédiaires (14, 15) sont des plaques planes.

21. Dispositif de recouvrement selon la revendication 19, **caractérisé par le fait que** les éléments de paroi intermédiaires (14, 15) sont réalisés en matière plastique.

22. Dispositif de recouvrement selon la revendication 19, **caractérisé par le fait que** les lamelles (18, 19) sont fixées aux éléments de paroi intermédiaires (14, 15).

23. Dispositif de recouvrement selon la revendication 1, **caractérisé par le fait que** les premiers évidements de guidage (32) sont disposés sur un premier côté de l'agencement de paroi en accordéon (12) et les deuxièmes évidements de guidage (33) sont disposés sur l'autre côté de l'agencement de paroi en accordéon (12).

24. Dispositif de recouvrement selon la revendication 23, **caractérisé par le fait que** les éléments de paroi intermédiaires (14, 15) sont des plaques planes.

25. Dispositif de recouvrement selon la revendication 23, **caractérisé par le fait que** les éléments de paroi intermédiaires (14, 15) sont réalisés en matière plastique.

26. Dispositif de recouvrement selon la revendication 23, **caractérisé par le fait qu'**un premier rail de guidage (25) est associé au premier évidement de guidage (32) et qu'un deuxième rail de guidage (26) est associé au deuxième évidement de guidage (33).

27. Dispositif de recouvrement selon la revendication 23, **caractérisé par le fait que** les premier et deuxième évidements de guidage (32, 33) sont orientés dans des directions différentes et forment un angle obtus (β) entre eux.

28. Dispositif de recouvrement selon la revendication 23, **caractérisé par le fait qu'**il est pourvu d'un blindage (20) qui comporte un certain nombre de lamelles (18, 19) en forme de bandes, lesquelles s'étendent perpendiculairement à la direction de mouvement (Z), peuvent être glissées les unes sur les autres et sont fixées à l'agencement de paroi en accordéon (12).

29. Machine-outil comprenant un élément de machine (4) monté mobile et un dispositif de guidage (2, 3) pour l'élément de machine (4), comprenant un premier dispositif de recouvrement (10) selon une des revendications précédentes et comprenant un deuxième dispositif de recouvrement (8) selon une des revendications 23 à 28.
